# EUROPÄISCHE PATENTSCHRIFT

(11) **EP 3 607 807 B1**
(45) Veröffentlichungstag und Bekanntmachung des Hinweises auf die Patenterteilung: **04.08.2021**
(21) Anmeldenummer: 19187215.9
(22) Anmeldetag: 19.07.2019
(51) Int. Cl.: A01B 1/06, A01D 42/04

(54) **VORRICHTUNG ZUR BEARBEITUNG EINES UNTERGRUNDS**
DEVICE FOR PROCESSING AN UNDERLYING SURFACE
DISPOSITIF DE TRAITEMENT D'UN SOUS-SOL

(30) Priorität: 07.08.2018 DE 102018119229
(43) Veröffentlichungstag der Anmeldung: 12.02.2020
(73) Patentinhaber: Mülders, Jürgen, 41066 Mönchengladbach (DE)
(72) Erfinder: Mülders, Jürgen, 41066 Mönchengladbach (DE)
(74) Vertreter: Müller, Jochen

(56) Entgegenhaltungen:
- EP-A2- 0 358 014
- DE-A1- 4 136 328
- DE-U1- 29 607 133
- GB-A- 2 292 059

## Beschreibung

Die Erfindung bezieht sich auf eine Vorrichtung zur Bearbeitung eines Untergrunds umfassend einen um eine Rotationsachse drehbaren Abtrieb, der durch einen Motor angetrieben ist, und einen an dem Abtrieb ausgebildeten Fortsatz, wobei an dem Fortsatz ein um eine Werkzeugachse drehbares Werkzeugteil angeordnet ist.

Es sind Vorrichtungen zur Bearbeitung eines Untergrunds, beispielsweise zur Bodenbearbeitung, insbesondere von Erdböden bekannt. Solche Vorrichtungen dienen neben der eigentlichen Bodenbearbeitung beispielsweise zum Schneiden von Pflanzen, zum Mulchen und/oder Umgraben des Substrats des Untergrunds. Die herkömmlichen Vorrichtungen sind häufig schwer und weit ausladend gebaut. Dadurch ist es mit solchen Vorrichtungen nicht möglich, in enge Bereiche zwischen Pflanzen und verwinkelte Beete und Rabatten zu gelangen. Diese herkömmlichen Vorrichtungen sind rasenmäherartig aufgebaut und können aufgrund ihres Gewichts nicht über längere Zeit getragen werden.

Ferner sind Motorsensen, wie in der EP 1 183 940 B1 beschrieben, bekannt, die zwar portabel sind, jedoch eine nur sehr unkontrollierte Schnittführung ermöglichen und aufgrund dessen leicht Beschädigungen an Zier- und Nutzpflanzen hervorrufen. Ferner muss das Werkzeug der Motorsense präzise eingestellt werden, damit das Werkzeug nicht über eine Schutzhaube der Vorrichtung radial hinausragt. Dies ist besonders bei nylonfadenbehafteten Werkzeugen problematisch. Aber auch mit Messern ausgerüstete Motorsensen stellen eine Gefahr durch unkontrollierte Bewegungen dar, da sie frei in der Luft balanciert werden müssen. Außerdem können Motorsensen das Substrat des Untergrundes nicht umgraben, da sie nur für ein radiales Schneiden ausgebildet ist. Somit kommen den Motorsensen Funktionalitäten ab, die unablässig für eine ausgewogene Gartenpflege sind.

Die DE 296 07 133 U1, die EP 0 358 014 A2, die DE 41 36 328 A1 und die GB 2 292 059 A zeigen Maschinen zum Bearbeiten eines Bodens mittels drehbarer Werkzeuge.

Der Erfindung liegt die Aufgabe zugrunde, eine Vorrichtung, der eingangs genannten Art zu schaffen, mit der Unkraut zwischen Zierpflanzen entfernt und gleichzeitig ein Substrat wie Erde des Untergrunds umgegraben werden kann.

Erfindungsgemäß wird die Aufgabe durch die Merkmale des unabhängigen Anspruchs gelöst.

Die Vorrichtung zur Bearbeitung eines Untergrunds umfasst einen um eine Rotationsachse drehbaren Abtrieb, der durch einen Motor angetrieben ist, und einen an dem Abtrieb ausgebildeten Fortsatz. Der Abtrieb kann direkt oder über ein Getriebe mit dem Motor verbunden sein. Die Vorrichtung kann als Gartengerät verwendet werden. Es wird vorgeschlagen, an dem Fortsatz ein um eine Werkzeugachse drehbares Werkzeugteil anzuordnen. Die Werkzeugachse des Werkzeugteils weist eine insbesondere zur Rotationsachse des Abtriebs unterschiedliche Ausrichtung auf. Die Drehung des Abtriebs um die Rotationsachse treibt die Drehung des Werkzeugteils um die Werkzeugachse an. Das Werkzeugteil an dem Fortsatz bearbeitet die Oberfläche des Untergrunds und kann hierbei Unkraut entfernen und/oder das Substrat des Untergrunds umgraben. Das Substrat kann Gartenerde sein, die durch die Bewegung des Fortsatzes um die Rotationsachse und des Werkzeugteils um die Werkzeugachse aufgewühlt und gewendet wird. Es kann auch eine Vielzahl von Fortsätzen und Werkzeugteilen an einem Abtrieb verwendet werden. Insbesondere können drei Fortsätze mit jeweils einem Werkzeugteil vorgesehen sein. Das Werkzeugteil ist als sternförmige Scheibe ausgeführt, und durch das Zentrum des Werkzeugteils ist die Werkzeugachse angeordnet. Dadurch dreht sich das scheibenförmige Werkzeugteil um die Werkzeugachse herum. Die Werkzeugachse ist senkrecht zum scheibenförmigen Werkzeugteil ausgerichtet. Zacken des sternförmigen Werkzeugteils können eine gebundene Drehung um die Werkzeugachse herum ausführen und dadurch den Untergrund bearbeiten. Dabei weist der Stern wenigstens drei Zacken auf. Ein sternförmiges Werkzeugteil kann durch die Zacken besonders effizient Unkraut entfernen und den Untergrund umgraben. Unterschiedliche Zacken des Werkzeugteils sind in unterschiedliche Richtungen bezüglich der Werkzeugachse gebogen. Die Zacken sind in Richtung des Fortsatzes und von dem Fortsatz weggebogen. Dabei weicht wenigstens ein Abschnitt der jeweiligen Zacke von einer senkrechten Richtung bezüglich der Werkzeugachse ab. Es sind auch Zacken vorgesehen, die nicht gebogen sind und durchgehend senkrecht zur Werkzeugachse ausgebildet sind. Wenigstens eine Zacke ist in Richtung des Fortsatzes und eine benachbarte Zacke in Richtung der Bearbeitungsrichtung gebogen. Ferner sind gegenüberliegende Zacken in unterschiedliche Richtungen gebogen. Insgesamt kann ein sternförmiges Werkzeugteil beispielsweise sechs Zacken aufweisen, die in symmetrischer Weise um die Werkzeugachse herum verteilt sind. Solch ein Werkzeugteil ist besonders effizient für die Bearbeitung eines Untergrunds verwendbar. Das Werkzeugteil ist frei drehbar, wodurch es an dem zu bearbeitenden Untergrund abgerollt werden kann.

Das Werkzeugteil führt gegenüber dem Fortsatz eine freie Relativbewegung um die Werkzeugachse herum aus, wobei es nicht unmittelbar mit dem Motor verbunden ist. Der Motor treibt lediglich den Abtrieb an, und bewirkt die Drehung des Abtriebs um seine Rotationsachse. Es besteht keine kinematische Verbindung zwischen dem Motor und der Werkzeugachse. Die Drehung des Werkzeugteils um die Werkzeugachse erfolgt durch den Kontakt mit dem Untergrund während der Drehung des Abtriebs, so dass die Werkzeugteile über beziehungsweise in dem Untergrund abrollen. Dadurch passen sich die Werkzeugteile an die Gegebenheiten des Untergrunds an und können behutsam Unkraut entfernen und das Substrat umgraben.

Die Unteransprüche stellen vorteilhafte Ausgestaltungen der Erfindung dar.

Nach einer vorteilhaften Weiterbildung ist der Fortsatz quer zu der Rotationsachse des Abtriebs ausgerichtet. Die Werkzeugachse, die an dem Fortsatz angeordnet ist, ist dadurch ebenfalls quer zu der Rotationsachse ausgerichtet. Ein Bearbeitungsabschnitt des Werkzeugteils kann dem Untergrund zugewandt sein. Der Bearbeitungsabschnitt dreht sich aufgrund der Drehung des Abtriebs ebenfalls um die Rotationsachse.

Vorteilhafterweise schließt der Fortsatz einen Winkel kleiner 90° mit der Rotationsachse ein, wobei der Winkel in einer Bearbeitungsrichtung geöffnet ist. In Richtung der Bearbeitungsrichtung ist das Werkzeugteil ausgerichtet. Die Drehung des Abtriebs bewirkt eine Bewegung des Fortsatzes entlang eines gedachten Kegelmantels, dessen Öffnung in Richtung des zu bearbeitenden Untergrunds gerichtet ist. Eine am Fortsatz quer ausgerichtete Werkzeugachse kann hingegen entlang einem gedachten Kegelmantel verlaufen, dessen Spitze dem Untergrund zugewandt ist. Durch die Konfiguration der Winkel kann ein robustes Eindringen der Werkzeugteile in den Untergrund gewährleistet werden.

Zweckmäßigerweise ist die Werkzeugachse im Bereich eines freien Endes des Fortsatzes positioniert. Das freie Ende ist dem Untergrund in Bearbeitungsrichtung entgegengerichtet, so dass das Werkzeugteil ebenfalls dem Untergrund zugewandt ist. Insbesondere erstreckt sich das Werkzeugteil über das freie Ende in Richtung des Untergrunds hinaus, sodass bei einer Bearbeitung das Werkzeugteil den Untergrund als erstes berührt.

Nach einer Weiterbildung ist die Werkzeugachse senkrecht zur Erstreckungsrichtung des Fortsatzes angeordnet bzw. ausgerichtet. Somit kann die Werkzeugachse in dem Material des Fortsatzes durch eine Lagerung angeordnet werden, wobei die Werkzeugachse senkrecht zur Erstreckungsrichtung des Fortsatzes ausgerichtet ist und bei einer Drehung des Abtriebs einen gedachten Kegelmantel beschreibt. Insbesondere schneidet die Werkzeugachse die Rotationsachse in Bearbeitungsrichtung. Vorzugsweise liegt die Spitze des gedachten Kegelmantels auf der Rotationsachse des Abtriebs. Beispielsweise kann der Abtrieb aus einem Blech gefertigt werden, wodurch der Fortsatz eine flächige Struktur aufweist, durch dessen Ebene die Werkzeugachse senkrecht hindurch läuft. Die Werkzeugachse kann fest bezüglich ihrer axialen Richtung in dem Fortsatz gelagert sein, und dennoch einen Freiheitsgrad zur Rotation des Werkzeugteils bereitstellen. Dadurch wird eine einfache und sehr effiziente Ausgestaltung der Vorrichtung erreicht.

Zum Schutz eines Nutzers sowie der Pflanzen, die durch die Vorrichtung nicht beschädigt werden sollen, ist der Abtrieb mit dem Fortsatz und dem Werkzeugteil in einer in Bearbeitungsrichtung geöffneten Haube angeordnet. Die Haube umgibt halbschalenförmig den Abtrieb mit den Werkzeugteilen und bildet somit eine Werkzeugeinheit. Ferner ragt das Werkzeugteil wenigstens teilweise aus der Öffnung der Haube heraus, sodass die Haube mit einem die Öffnung umringenden Rand auf den Untergrund abgesetzt werden und dabei das Werkzeugteil in den Untergrund hineinreichen kann. Somit sind die Werkzeugteile durch die Haube von der Umgebung abgeschirmt, sodass Pflanzen und der Nutzer von außen durch die Haube räumlich von dem Werkzeugteil getrennt sind. Die Werkzeugeinheit kann auf dem Untergrund verschoben werden, wobei der Rand auf dem Boden positioniert bleiben kann. Ergänzend kann auch das freie Ende des Fortsatzes aus der Öffnung herausragen und in den Untergrund für eine Bearbeitung hineinreichen.

Um eine vorteilhafte Handhabbarkeit der Vorrichtung zu gewährleisten, kann der Abtrieb insbesondere im Bereich eines Endes eines Stiels angebracht sein, wobei der Stiel an einer der Bearbeitungsrichtung abgewandten Seite des Abtriebs angebracht ist. Insbesondere kann die Werkzeugeinheit mit der Haube in den Werkzeugteilen an dem Ende des Stiels befestigt werden. Dabei ist die Öffnung der Haube von dem Stiel abgewandt, sodass ein Nutzer das Ende des Stiels gegen den Untergrund drücken kann, um die Werkzeugteile in den Untergrund zu graben.

An dem Stiel kann ein Schalter positioniert sein, mittels dem der Motor einschaltbar ist. Dadurch braucht ein Nutzer keinen Schalter unmittelbar am Motor betätigen, sondern kann die Vorrichtung im ausgeschalteten Zustand in Bearbeitungsposition bringen und anschließend einschalten

Eine bevorzugte Ausführungsform der Vorrichtung sieht vor, dass der Motor an einer abgewandten Seite des Abtriebs positioniert ist. Der Motor ist insbesondere ein Elektromotor und in der Vorrichtung ist eine Batterie vorgesehen, mittels der der Motor mit Energie versorgt wird. Die Batterie kann am Stiel befestigt werden. Durch die Verwendung eines Elektromotors wird eine komplizierte und wartungsarme Nutzung der Vorrichtung ermöglicht. Selbstverständlich kann die Batterie als ein aufladbarer Akkumulator ausgebildet sein. Alternativ kann der Motor ein Verbrennungsmotor sein, wobei ein Tank an dem Stiel oder direkt an dem Motor angebracht sein kann. Durch einen Verbrennungsmotor können lange Nutzungszeiten der Vorrichtung gewährleistet werden.

Insbesondere kann der Motor zwischen einer oberen und einer unteren Platte oder in einem Gehäuse positioniert sein. Dadurch ist der Motor von Umgebungseinflüssen wie Regen, Schmutz oder starke Sonneneinstrahlung geschützt. Im Falle zweier Platten, können diese mittels langer Schrauben und Distanzstücken zueinander beabstandet und gleichzeitig fixiert werden.

Die Haube kann an der unteren Platte oder einem Abschnitt des Gehäuses befestigt sein, der dem Untergrund zugewandt ist, und die obere Platte oder ein oberer Abschnitt des Gehäuses kann insbesondere an einem Ende eines Stiels befestigt werden. Dazu kann eine Halterung zwischen dem Stiel und dem Gehäuse oder der Platte positioniert werden.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörige Zeichnung näher erläutert.

Es zeigt:
- Fig. 1: eine Werkzeugeinheit mit einer Haube, in der eine Abtrieb mit Werkzeugteilen enthalten ist,
- Fig. 2: eine Vorrichtung als Gartengerät mit einer Werkzeugeinheit an einem Ende eines Stiels,
- Fig. 3: eine Anbringung der Werkzeugeinheit an einer Halterung der Vorrichtung, und
- Fig. 4: eine Seitenansicht der Halterung der Vorrichtung mit der Werkzeugeinheit und einem Motor.

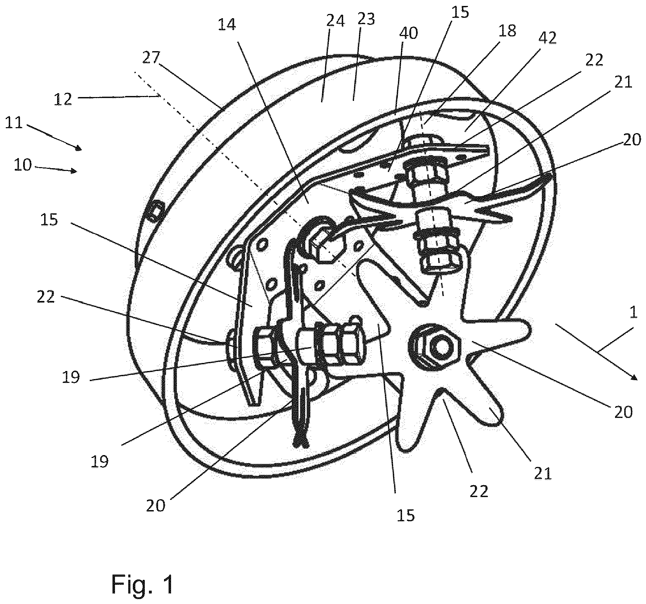

In Fig. 1 ist eine Werkzeugeinheit 11 einer Vorrichtung 10 zum Bearbeiten eines Untergrunds 38 gezeigt. Die Werkzeugeinheit 11 umfasst eine Haube 24, die halbschalenförmig ausgebildet ist. Die Haube 24 weist im Wesentlichen einen kreisförmigen Querschnitt auf. Ein Rand 40 begrenzt eine Öffnung 42 der Haube 24. Der Rand 40 ist an einem dem Untergrund 38 zugewandten Ende eines Bunds 23 der Haube 24 angeformt. Der Bund 23 erstreckt sich von der Öffnung 42 aus in Richtung einer Rückseite 27 der Haube 24.

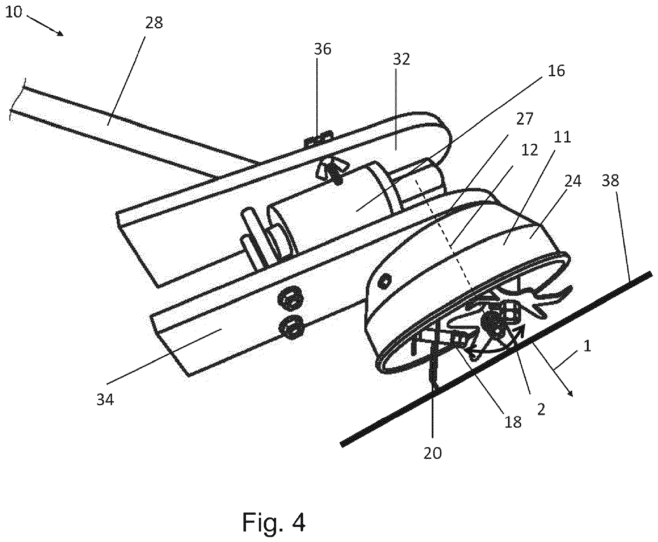

Innerhalb der Haube 24 ist der Abtrieb 14 angeordnet. Der Abtrieb 14 weist eine Rotationsachse 12 auf. Ferner erstrecken sich aus einem mittleren Teil des Abtriebs 14 drei um die Rotationsachse 12 herum symmetrisch verteilte Fortsätze 15. Die Fortsätze 15 schließen einen Winkel kleiner als 90° mit der Rotationsachse 12 ein, wobei der Winkel in Richtung einer Bearbeitungsrichtung 1 geöffnet ist. Der Winkel und die Öffnung 40 weisen in die gleiche Richtung. Der Abtrieb 14 ist aus Blech gefertigt, wobei die Fortsätze 15 aus Blechlaschen gebildet sind, die in Richtung der Bearbeitungsrichtung 1 abgewinkelt sind. Insbesondere können die Fortsätze 15 einen Winkel von ungefähr 45° mit der Rotationsachse 12 einschließen. Die Fort-sätze 15 beschreiben bei einer Drehung des Abtriebs 14 um die Rotationsachse 12 einen Kegelmantel, der in Bearbeitungsrichtung 1 geöffnet ist. Die Rotationsachse 12 ist starr mit dem Abtrieb 14 verbunden und führt durch die Rückseite 27 der Haube 24 hindurch. Auf der Rückseite 27 ist die Rotationsachse 12 mit einem Elektromotor 16, wie in Fig. 4 gezeigt, verbunden.

An freien Enden 22 der Fortsätze 15 ist jeweils ein Werkzeugteil 20 angeordnet, das um eine Werkzeugachse 18 drehbar gelagert ist. Die Werkzeugachse 18 ist zu der Fläche des jeweiligen Fortsatzes 15 senkrecht ausgerichtet. Die Werkzeugachsen 18 beschreiben bei einer Drehung des Abtriebs 14 um die Rotationsachse 12 einen Kegelmantel, dessen Spitze in Bearbeitungsrichtung 1 weist. Die Werkzeugteile 20 sind jeweils frei um die Werkzeugachse 18 drehbar, wobei sie zwischen zwei entlang der Werkzeugachse 18 angeordnete Buchsen 19 gelagert sind. Ein Ende der jeweiligen Werkzeugachse 18 ist an einem Fortsatz 15 befestigt, während das gegenüberliegende Ende frei von dem Werkzeugteil 20 absteht.

Die Werkzeugteile 20 sind sternförmige Scheiben, die jeweils vorzugsweise sechs Zacken 21 aufweisen. Die Zacken 21 sind gebogen. Ein Teil der Zacken 21 ist in Richtung des Fortsatzes 15 und ein Teil in Bearbeitungsrichtung 1 gebogen. Ferner sind gegenüberliegende Zacken 21 in unterschiedliche Richtungen gebogen. In der Werkzeugeinheit 11 sind drei sternförmige Werkzeugteile 20 enthalten. Die Werkzeugteile 20 weisen keinen separaten Antrieb auf. Außerdem sind die Werkzeugteilen 20 auch nicht mit dem Motor 16 der Rotationsachse 12 verbunden.

Eine Drehung 2 der Werkzeugteile 20 erfolgt wie in Fig. 4 gezeigt, indem die Werkzeugeinheit 11 gegen den zu bearbeitenden Untergrund 38 gehalten wird, und der Abtrieb 14 eine Drehung um die Rotationsachse 12 ausführt, wobei mit dem Untergrund 38 in Kontakt stehenden Werkzeugteile 20 über oder in den Untergrund 38 abrollen.

Alternativ ist eine Werkzeugeinheit 11 möglich, die mehr als drei Fortsätze 15 aufweist, und somit auch mehr als drei Werkzeugteile 20 umfasst. Ferner können Werkzeugteile 20 vorgesehen sein, die weniger oder mehr als sechs Zacken 21 aufweisen. Die Zacken 21 können nach vorne oder nach hinten gebogen oder unverbogen und somit gerade sein. Die unterschiedlich gestalteten Zacken 21 können an einem Werkzeugteil 20 miteinander kombiniert werden.

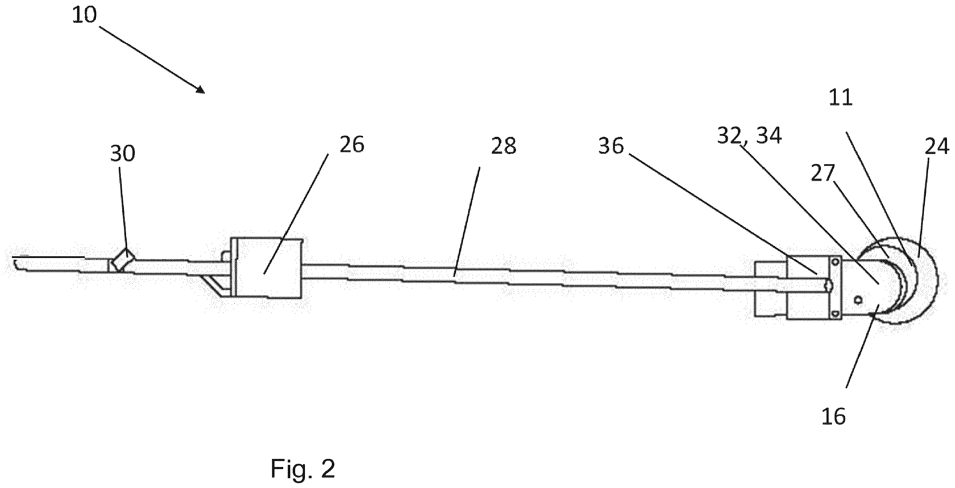

Fig. 2 zeigt die Vorrichtung 10 als Gartengerät, wobei an einem Stiel 28 ein Schalter 30 und eine Batterie 26 zum Betreiben des Motors 16 angeordnet sind. Der Schalter 30 ist an einem oberen Ende des Stiels 28 befestigt, während an einer Halterung 36 an einem gegenüberliegenden Ende des Stiels 28 zwei Platten 32, 34 positioniert sind, an denen der Motor 16 und die Werkzeugeinheit 11 angebracht sind. Die Haube 24 ist mit ihrer Rückseite 27 an den Platten 32, 34 befestigt. Anstatt der Platten 32, 34 kann auch ein Gehäuse verwendet werden, von dem der Motor 16 umgeben sein kann, wobei die Werkzeugeinheit 11 an das Gehäuse angebracht werden kann. Das Gehäuse ist nicht dargestellt. Die Batterie 26 ist zwischen dem Schalter 30 und der Halterung 36 an dem Stiel 28 angeordnet und kann als Akkumulator oder dergleichen ausgebildet sein. Ein Nutzer kann den Stiel 28 mit einer Hand oder beiden Händen ergreifen und das mit der Werkzeugeinheit 11 versehene Ende gegen einen zu bearbeitenden Untergrund 38 drücken.

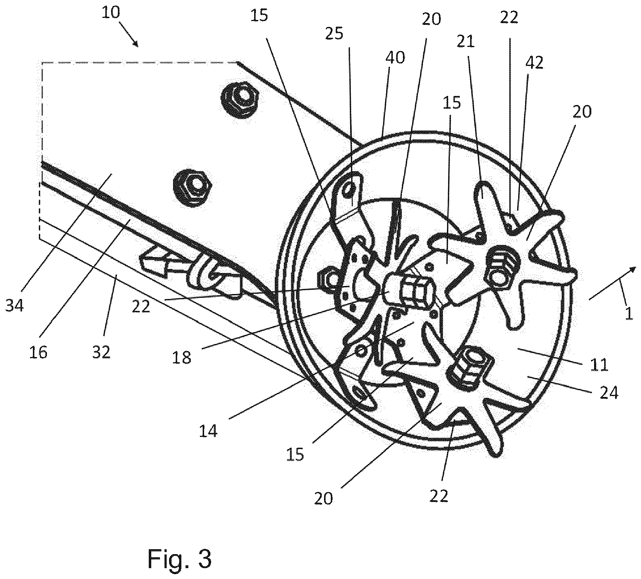

Fig. 3 zeigt eine Unteransicht einer an einer unteren Platte 34 angebrachten Werkzeugeinheit 11. In der Haube 24 sind Winkel 25 für die Befestigung der Werkzeugeinheit 11 an der unteren Platte 34 eingebracht. Alternativ kann mittels der Winkel 25 die Werkzeugeinheit 11 an einem den Motor 16 umfassenden Gehäuse befestigt werden. In der unteren Platte 34 sind zwei Schrauben eingeschraubt, mittels derer die obere Platte 32 fest mit der unteren Platte 34 verbunden wird.

Eine Seitenansicht der Anbringung der Werkzeugeinheit 11 ist in Fig. 4 gezeigt, wobei die obere von der unteren Platte 32, 34 durch die beiden Schrauben derart beabstandet ist, dass der Motor 16 dazwischen angeordnet werden kann. Anstatt der Platten 32, 34 kann auch ein nicht abgebildetes Gehäuse den Motor 16 umfassen und an einem Ende des Stiels 28 angebracht werden. Die Halterung 36 ist mittels weiterer Schrauben an der oberen Platte 32 angeschraubt. Die Schrauben können mittels einer Flügelmutter festgezogen werden. Der Motor 16 ist ein Elektromotor und beispielsweise von Scheibenwischanlagen für Kraftfahrzeuge mit einer Nennspannung von 12 V bekannt. Es kann ein bürstenbehafteter Motor 16 als auch ein elektrisch kommutierter Motor 16 in der Vorrichtung 10 verwendet werden.

Die Platten 32, 34 können durch das Gehäuse ersetzt werden, sodass die Werkzeugeinheit 11 und ein Stiel 28 oder ein Griff für die Vorrichtung 10 an dem Gehäuse angebracht werden kann. Die Platten 32, 34 wirken äquivalent wie das Gehäuse und weisen eine grundsätzlich ähnliche Struktur auf. Alle mit den Platten 32, 34 zusammenwirkenden Mittel bzw. Komponenten, die bereits erläutert wurden oder im Folgenden noch beschrieben werden, können auch mit einem Gehäuse kombiniert werden. Ferner sind die Platten 32, 34 gehäuseartig in der Vorrichtung verbaut, sodass lediglich eine seitliche Wandung zwischen den Platten 32, 34 fehlt um ein geschlossenes Gehäuse zu erlangen. Solch eine seitliche Wandung kann einstückig mit oder separat zu den Platten 32, 34 ausgebildet sein, wodurch beides Mal ein geschlossenes Gehäuse bereitgestellt wird.

Die Rotationsachse 12 geht durch die Rückseite 27 der Haube 24 und durch die untere Platte 34 oder durch einen unteren Abschnitt eines Gehäuses hindurch und ist mit dem Motor 16 verbunden. Die Verbindung kann über ein Umlenkgetriebe wie einem Kegelradgetriebe oder eine flexible Welle oder eine rotationsfähige Gelenkwelle bereitgestellt werden. Die Rotation des Abtriebs 14 um die Rotationsachse 12 bewirkt ein Abrollen der Werkzeugteilen 20 um ihre Werkzeugachse 18, wenn die Werkzeugteile 20 gegen den Untergrund 38 gedrückt werden. Dadurch werden die Werkzeugteile 20 in eine Drehung 2 versetzt. Die Drehung 2 der jeweiligen Werkzeugteile 20 wird nicht direkt durch den Motor 16 angetrieben. Vielmehr erfolgt die Drehung 2 nur bei Kontakt mit dem Untergrund 38, während der Drehung des Abtriebs 14 um die Rotationsachse 1.

### Bezugszeichen

- 1: Bearbeitungsrichtung
- 2: Drehung
- 10: Vorrichtung
- 11: Werkzeugeinheit
- 12: Rotationsachse
- 14: Abtrieb
- 15: Fortsatz
- 16: Motor
- 18: Werkzeugachse
- 19: Buchse
- 20: Werkzeugteil
- 21: Zacke
- 22: freies Ende
- 23: Bund
- 24: Haube
- 25: Winkel
- 26: Batterie
- 27: Rückseite
- 28: Stiel
- 30: Schalter
- 32: obere Platte
- 34: untere Platte
- 36: Halterung
- 38: Untergrund
- 40: Rand
- 42: Öffnung

## Patentansprüche

1. Vorrichtung zur Bearbeitung eines Untergrunds umfassend einen um eine Rotationsachse (12) drehbaren Abtrieb (14), der durch einen Motor (16) angetrieben ist, und einen an dem Abtrieb (14) ausgebildeten Fortsatz (15), wobei an dem Fortsatz (15) ein um eine Werkzeugachse (18) drehbares Werkzeugteil (20) angeordnet ist, **dadurch gekennzeichnet, dass** das Werkzeugteil (20) eine sternförmige Scheibe ist, durch deren Zentrum die Werkzeugachse (18) angeordnet ist, wobei unterschiedliche Zacken (21) des Werkzeugteils (20) in unterschiedliche Richtungen bezüglich der Werkzeugachse (18) gebogen sind, wobei gegenüberliegende Zacken (21) in unterschiedliche Richtungen gebogen sind, wobei wenigstens eine Zacke (21) in Richtung des Fortsatzes (15) und eine weitere Zacke (18) in Richtung der Bearbeitungsrichtung (1) gebogen ist, wobei ein Abschnitt der jeweiligen Zacke von einer senkrechten Richtung bezüglich der Werkzeugachse abweicht und eine Zacke (21) durchgehend senkrecht von der Werkzeugachse (18) absteht, wobei das Werkzeugteil (20) frei drehbar ist, und dadurch an einem zu bearbeitenden Untergrund abrollbar ist, sodass das sternförmige Werkzeugteil (20) durch die Zacken (21) Unkraut entfernt und den Untergrund umgräbt.

2. Vorrichtung nach Anspruch 1, **dadurch gekennzeichnet, dass** der Fortsatz (15) quer zu der Rotationsachse (12) des Abtriebs (14) ausgerichtet ist.

3. Vorrichtung nach Anspruch 1 oder 2, **dadurch gekennzeichnet, dass** der Fortsatz (15) einen Winkel kleiner 90° mit der Rotationsachse (12) einschließt, wobei der Winkel in einer Bearbeitungsrichtung (1) geöffnet ist.

4. Vorrichtung nach einem der vorhergehenden Ansprüche, **dadurch gekennzeichnet, dass** die Werkzeugachse (18) im Bereich eines freien Endes (22) des Fortsatzes (15) positioniert ist.

5. Vorrichtung nach einem der vorhergehenden Ansprüche, **dadurch gekennzeichnet, dass** die Werkzeugachse (18) quer, oder senkrecht, zur Erstreckungsrichtung des Fortsatzes (15) angeordnet ist.

6. Vorrichtung nach einem der vorhergehenden Ansprüche, **dadurch gekennzeichnet, dass** der Abtrieb (14) mit dem Fortsatz (15) und dem Werkzeugteil (20) in einer in Bearbeitungsrichtung (1) geöffneten Haube (24) angeordnet ist.

7. Vorrichtung nach einem der vorhergehenden Ansprüche, **dadurch gekennzeichnet, dass** der Abtrieb (14) insbesondere im Bereich eines Endes eines Stiels (28) angebracht ist, wobei der Stiel (28) an einer der Bearbeitungsrichtung (1) abgewandten Seite des Abtriebs (14) angebracht ist, wobei der Abtrieb (14) insbesondere in einer Haube (24) angeordnet ist.

8. Vorrichtung nach Anspruch 7, **dadurch gekennzeichnet, dass** an dem Stiel (28) ein Schalter (30) positioniert ist, mittels dem der Motor (16) einschaltbar ist.

9. Vorrichtung nach einem der vorhergehenden Ansprüche, **dadurch gekennzeichnet, dass** der Motor (16) an einer abgewandten Seite des Abtriebs (14) positioniert ist, wobei der Motor (16) als ein Elektromotor ausgebildet und eine Batterie (26) zur Energieversorgung des Motors (16) vorgesehen ist oder als ein Verbrennungsmotor ausgeführt ist, der mit einem Treibstofftank verbunden ist.

10. Vorrichtung nach einem der vorhergehenden Ansprüche, **dadurch gekennzeichnet, dass** der Motor (16) zwischen einer oberen und einer unteren Platte (32, 34) oder in einem Gehäuse positioniert ist.

11. Vorrichtung nach einem der vorhergehenden Ansprüche, **dadurch gekennzeichnet, dass** die Haube (24) an der unteren Platte (34) oder einem Abschnitt des Gehäuses befestigt ist, und die obere Platte (32) oder ein Abschnitt des Gehäuses insbesondere an einem Ende eines Stiels (28) befestigt ist.

12. Vorrichtung nach einem der vorhergehenden Ansprüche, **dadurch gekennzeichnet, dass** die Vorrichtung (10) lösbar mit einem Multifunktionsgerät koppelbar ist, wobei eine Kupplung für die Verbindung mit dem Multifunktionsgerät vorgesehen ist, so dass die Vorrichtung (10) mittels eines am Multifunktionsgerät angebrachten Elektromotors oder Verbrennungsmotors antreibbar ist.

13. Vorrichtung nach einem der Ansprüche 7 bis 12, **dadurch gekennzeichnet, dass** die Vorrichtung (10) mit einem Kurzstiel ausgestattet ist, der kürzer ist als der Stiel (28) bemessen ist und insbesondere bis ungefähr zur Hüfte eines Nutzers reicht, oder mit einem Handgriff ausgestattet ist, der ein Greifen der Vorrichtung unmittelbar hinter der Werkzeugeinheit (11) vorsieht.

## Claims

1. Device for processing an underlying surface, comprising an output (14) which can be rotated about an axis of rotation (12) and which is driven by a motor (16), and an extension (15) formed on the output (14), a tool part (20) which can be rotated about a tool axis (18) being arranged on the extension (15), **characterized in that** the tool part (20) is a star-shaped disk, through the center of which the tool axis (18) is arranged, different prongs (21) of the tool part (20) being bent in different directions with respect to the tool axis (18), opposing prongs (21) being bent in different directions, at least one prong (21) being bent in the direction of the extension (15) and a further prong (18) being bent in the direction of the processing direction (1) is bent, a portion of the particular prong deviating from a perpendicular direction with respect to the tool axis and one prong (21) protruding in a continuously perpendicular manner from the tool axis (18), it being possible for the tool part (20) to rotate freely, and therefore to be rolled on the underlying surface to be processed, so that the star-shaped tool part (20) removes weeds using the prongs (21) and digs up the underlying surface.

2. Device according to claim 1, **characterized in that** the extension (15) is oriented transversely to the axis of rotation (12) of the output (14).

3. Device according to either claim 1 or claim 2, **characterized in that** the extension (15) includes an angle of less than 90° with the axis of rotation (12), the angle being open in a processing direction (1).

4. Device according to any of the preceding claims, **characterized in that** the tool axis (18) is positioned in the region of a free end (22) of the extension (15).

5. Device according to any of the preceding claims, **characterized in that** the tool axis (18) is arranged transversely or perpendicularly to the extension direction of the extension (15).

6. Device according to any of the preceding claims, **characterized in that** the output (14) having the extension (15) and the tool part (20) is arranged in a hood (24) which is open in the processing direction (1).

7. Device according to any of the preceding claims, **characterized in that** the output (14) is attached in particular in the region of an end of a handle (28), the handle (28) being attached to a side of the output (14) facing away from the processing direction (1), the output (14) being arranged in particular in a hood (24).

8. Device according to claim 7, **characterized in that** a switch (30) is positioned on the handle (28), by means of which the motor (16) can be switched on.

9. Device according to any of the preceding claims, **characterized in that** the motor (16) is positioned on a side facing away from the output (14), the motor (16) being designed as an electric motor and a battery (26) being provided for supplying energy to the motor (16), or designed as an internal combustion engine that is connected to a fuel tank.

10. Device according to any of the preceding claims, **characterized in that** the motor (16) is positioned between an upper and a lower plate (32, 34) or in a housing.

11. Device according to any of the preceding claims, **characterized in that** the hood (24) is attached to the lower plate (34) or a portion of the housing, and the upper plate (32) or a portion of the housing is fastened in particular at one end of a handle (28).

12. Device according to any of the preceding claims, **characterized in that** the device (10) can be detachably coupled to a multifunction device, a coupling being provided for connection to the multifunction device, such that the device (10) can be driven by means of an electric motor or internal combustion engine attached to the multifunction device.

13. Device according to any of claims 7 to 12, **characterized in that** the device (10) is equipped with a short handle which is shorter than the handle (28) and in particular extends approximately to the hip of a user, or is equipped with a hand grip which allows the device to be gripped immediately behind the tool unit (11).

## Revendications

1. Dispositif d'usinage d'un substratum comprenant un entraînement de sortie (14) pouvant tourner autour d'un axe de rotation (12) et entraîné par un moteur (16), et une extension (15) formée sur l'entraînement de sortie (14), une partie d'outil (20) pouvant tourner autour d'un axe d'outil (18) étant disposée sur l'extension (15), **caractérisé en ce que** la partie d'outil (20) est un disque en forme d'étoile, l'axe d'outil (18) étant disposé à travers le centre de celui-ci, différentes griffes (21) de la partie d'outil (20) étant pliées dans des directions différentes par rapport à l'axe d'outil (18), les griffes opposées (21) étant pliées dans des directions différentes, au moins une griffe (21) étant pliée dans le sens de l'extension (15) et une autre griffe (18) dans le sens du sens d'usinage (1), une section de la griffe respective s'écartant d'une direction perpendiculaire par rapport à l'axe d'outil et une griffe (21) faisant saillie de façon continuellement perpendiculaire à partir de l'axe d'outil (18), la partie d'outil (20) pouvant tourner librement et pouvant ainsi être roulée sur un substratum à usiner, de sorte que la partie d'outil (20) en forme d'étoile élimine les mauvaises herbes grâce aux griffes (21) et bêche le substratum.

2. Dispositif selon la revendication 1, **caractérisé en ce que** l'extension (15) est orientée transversalement à l'axe de rotation (12) de l'entraînement de sortie (14).

3. Dispositif selon la revendication 1 ou 2, **caractérisé en ce que** l'extension (15) forme un angle inférieur à 90° avec l'axe de rotation (12), l'angle étant ouvert dans un sens d'usinage (1).

4. Dispositif selon l'une des revendications précédentes, **caractérisé en ce que** l'axe d'outil (18) est positionné au niveau d'une extrémité libre (22) de l'extension (15).

5. Dispositif selon l'une des revendications précédentes, **caractérisé en ce que** l'axe d'outil (18) est disposé transversalement ou perpendiculairement au sens d'étendue de l'extension (15).

6. Dispositif selon l'une des revendications précédentes, **caractérisé en ce que** l'entraînement de sortie (14) est disposé, avec l'extension (15) et la partie d'outil (20), dans un capot (24) ouvert dans le sens d'usinage (1).

7. Dispositif selon l'une des revendications précédentes, **caractérisé en ce que** l'entraînement de sortie (14) est monté en particulier dans la zone d'une extrémité d'une tige (28), la tige (28) étant montée sur un côté de l'entraînement de sortie (14) détourné du sens d'usinage (1), l'entraînement de sortie (14) étant disposé en particulier dans un capot (24).

8. Dispositif selon la revendication 7, **caractérisé en ce qu'**un interrupteur (30) est positionné sur la tige (28), au moyen duquel le moteur (16) peut être mis en marche.

9. Dispositif selon l'une des revendications précédentes, **caractérisé en ce que** le moteur (16) est positionné sur un côté de l'entraînement de sortie (14) opposé, le moteur (16) étant conçu comme un moteur électrique et une batterie (26) étant prévue pour l'alimentation en énergie du moteur (16) ou étant conçu comme un moteur à combustion interne, lequel est relié à un réservoir de carburant.

10. Dispositif selon l'une des revendications précédentes, **caractérisé en ce que** le moteur (16) est positionné entre une plaque supérieure et une plaque inférieure (32, 34) ou dans un boîtier.

11. Dispositif selon l'une des revendications précédentes, **caractérisé en ce que** le capot (24) est fixé sur la plaque inférieure (34) ou sur une section du boîtier, et que la plaque supérieure (32) ou une section du boîtier est fixée en particulier au niveau d'une extrémité d'une tige (28).

12. Dispositif selon l'une des revendications précédentes, **caractérisé en ce que** le dispositif (10) peut être accouplé de manière amovible à un appareil multifonction, un accouplement étant prévu pour la liaison à l'appareil multifonction de sorte que le dispositif (10) peut être entraîné au moyen d'un moteur électrique ou d'un moteur à combustion interne monté sur l'appareil multifonction.

13. Dispositif selon l'une des revendications 7 à 12, **caractérisé en ce que** le dispositif (10) est équipé d'une tige courte qui est plus courte que la tige (28) et qui s'étend en particulier approximativement jusqu'à la hanche d'un utilisateur, ou est équipé d'une poignée qui permet de saisir le dispositif directement derrière l'unité d'outil (11).
